# EUROPEAN PATENT SPECIFICATION

(11) **EP 4 107 127 B1**
(45) Date of publication and mention of the grant of the patent: **18.02.2026**
(21) Application number: 21706236.3
(22) Date of filing: 16.02.2021
(51) Int. Cl.: C02F 1/16, B01D 1/18, C02F 11/127, C02F 11/13, B01D 1/28, B01D 3/00

(54) **SLUDGE DRYING METHOD**
SCHLAMMTROCKNUNGSVERFAHREN
PROCÉDÉ POUR LE SÉCHAGE DES BOUES

(30) Priority: 17.02.2020 GB 202002145
(43) Date of publication of application: 28.12.2022
(73) Proprietor: FJELL BIODRY AS, 5006 Bergen (NO)
(72) Inventor: STRAND, Asbjørn, 5067 Bergen (NO)
(74) Representative: J A Kemp LLP
(86) International application number: PCT/EP2021/053743
(87) International publication number: WO 2021/165247

(56) References cited:
- EP-A1- 2 537 815
- CN-A- 109 912 173
- CN-A- 110 482 826
- CN-U- 208 234 746

## Description

### FIELD OF INVENTION

The present invention relates to techniques for drying sludge.

### BACKGROUND

The drying of sludge is required in many industries. For example, industrial scale dryers may be used for waste water treatment, sewage treatment, aquaculture waste treatment (such as fish farm waste treatment), the general treatment of industrial waste output and in food preparation (such as animal and fish feed preparation).

It is known for disc dryers, such as steam-heated rotating disc dryers, to be used for the drying of sludge. A steam-heated rotating disc dryer is disclosed in US 2,883,163A. Known disc dryers also include dryers manufactured by Fjell Technology Group AS: http://www.fjelltg.no/products/fjellturbodisedryer/ (as viewed on 14^{th} February 2020), and dryers manufactured by Haarslev: https://haarslev.com/products/disc-dryer/ (as viewed on 14^{th} February 2020). Known solutions for drying sludge also include friction dryers such as that described in patent WO 02/093094 A1.

There are a number of technical challenges associated with the drying of sludge. For some types of sludge, problems may be caused by the properties of the sludge including a glue zone, as described in WO 02/093094A1. Furthermore, friction dryers are typically operated by large electrical motors that generate heat by friction. There is therefore no, or limited, waste heat recovery.

There is therefore general need to improve the operating efficiency of sludge dryers.
CN 208 234 746 U discloses background information.
CN 110 482 826 A discloses background information.
EP 2 537 815 A1 discloses background information.
CN 109 912 173 A discloses background information.

### SUMMARY OF INVENTION

Aspects of the invention are set out in the independent claims.

Optional features are set out in the dependent claims.

### BRIEF DESCRIPTION OF THE DRAWINGS

The accompanying drawings, which are incorporated herein and form part of the specification, illustrate embodiments of the invention and serve to clarify some aspects of embodiments of the invention and to enable a skilled person in the relevant art(s) to make and use embodiments of the invention.

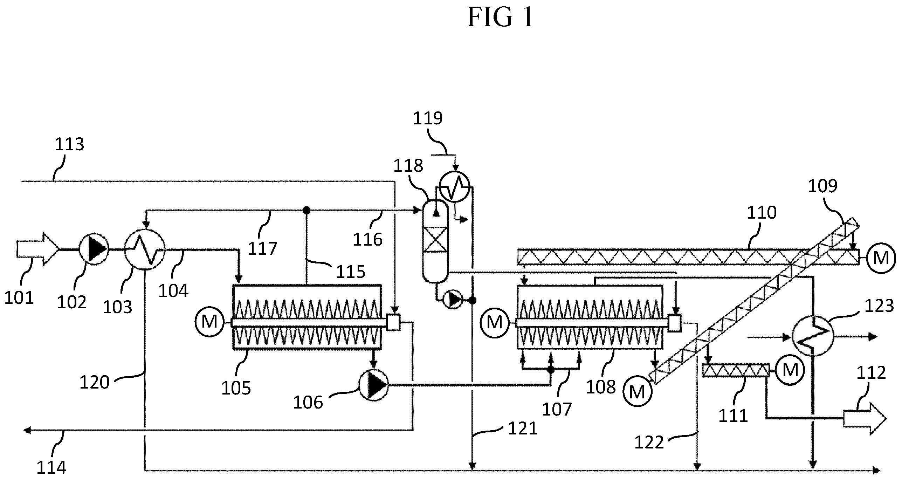

Figure 1 is a schematic diagram of a sludge drying system used in the method according to an embodiment of the invention.

### DETAILED DESCRIPTION OF THE INVENTION

Embodiments of the invention provide a heat-efficient sludge drying method Embodiments of the invention may be capable of drying sludge from a wet sludge stream to a substantially dry sludge stream. Embodiments may provide a more energy efficient sludge drying method than known techniques.

The sludge drying system used in the method according to embodiments comprises at least two dryers. A wet sludge stream is indirectly heated in a first dryer. Water is evaporated from the wet sludge stream in the first dryer to generate a partially dry sludge stream that is output from the first dryer. The partially dry sludge stream is then fed into a second dryer. The evaporated water in the first dryer is used to indirectly heat the sludge in the second dryer. The use of the heat in the evaporated water generated in the first dryer for indirect heating in the second dryer provides an energy efficient sludge drying system.

Sludge is a wet solid product that comprises water and solid material. Sludge may, for example, come from a water treatment plant and may be at least partially dewatered in, for example, a decanter centrifuge, filter press or screw press. Applications of sludge drying systems according to embodiments include, but are not limited to, the drying of sludge from municipal waste water treatment plants, the drying of sludge comprising human waste (such as in sewage treatment plants), the drying of sludge comprising agricultural and/or aquacultural waste (for example from fish farms), the drying of sludge in industrial effluent treatment plants, the drying of sludge from the mining industry, the drying of sludge in the food preparation industry, the drying of sludge for water treatment in the fish farming industry and the drying of products from the brewing and distilling industry. In particular, the sludge may comprise fish, for example cut-offs and offal from fish and/or processed fish, and/or animal products from slaughterhouses. Such a sludge may be used in the production of, for example, animal and/or fish meal. Sludge may generally be any viscous mixture of water and organic and/or inorganic material where a major part of the dry solids is in suspension and not solution.

Figure 1 is a schematic diagram illustrating a sludge drying system not being part of the current invention.

The sludge drying system comprises an input 101 for receiving a wet sludge stream.

The wet sludge stream is fed to a first dryer 105.

Between the input 101 and the first dryer 105, the wet sludge stream may be fed through a pre-heater 103 that heats the wet sludge stream. The pre-heater 103 may indirectly heat the wet sludge stream with some of the evaporate from the first dryer 105 and thereby both heat the wet sludge stream and condense the evaporate. Alternatively, the pre-heater 103 may directly mix the evaporate and the wet sludge stream. Although not shown in Figure 1, an additional mechanical dewatering mechanism may be provided between the pre-heater 103 and the first dryer 105 to remove condensate from the wet sludge stream. Embodiments also include the pre-heater 103 heating the wet sludge stream according to any known technique.

In Figure 1, flow path 104 is a pre-heated flow of a wet sludge stream to the first dryer 105.

The flow path of the wet sludge stream from the input 101 to the first dryer 105 may comprise any suitable feed pump 102 as is known in the art. A suitable such pump is a positive displacement pump such as a piston pump, a lamella pump, a lobe pump, a reciprocal pump or a progressive cavity pump.

The wet sludge stream that is fed into the first dryer 105 may have a dry solids (DS) content of about 15-35%DS. The wet sludge stream is heated in the first dryer 105 and output as a partially dry sludge stream. The partially dry sludge stream may have a DS content of about 40-50%DS. The DS content of the partially dry sludge stream that the first dryer 105 is configured to output depends on the type of sludge that is being dried. When used with types of sludge that have a glue zone (as described in WO 02/093094A1), the first dryer 105 is preferably configured to generate partially dry sludge with a DS content that is below the level at which the sludge is in a glue zone.

The first dryer 105 may be an indirectly heated dryer, such as a steam heated rotating disc dryer. The first dryer 105 may comprise a plurality of heated discs mounted on a pipe rotating inside a closed chamber. In particular, the first dryer 105 may be a steam-heated rotating disc dryer, for example based on that disclosed in patent US 2,883,163 A. The first dryer 105 may be, for example, based on: a known dryer as manufactured by Fjell Technology Group AS:
http://www.fjelltg.no/products/fjellturbodiscdryer/ (as viewed on 14^{th} February 2020), a known dryer as manufactured by Haarslev: https://haarslev.com/products/disc-dryer/ (as viewed on 14^{th} February 2020), or any other suitable known dryers. The first dryer 105 may alternatively be an electrically heated dryer or a dryer heated by thermal oil, hot water or any type of indirectly heated dryer.

When the first dryer 105 is in use, the sludge is located in an indirectly heated processing chamber of the first dryer 105. The processing chamber is preferably sealed such that no volatiles from the sludge can contaminate other parts of the first dryer 105.

In embodiments in which the first dryer 105 is a steam-heated dryer, the condensate formed as the steam gives up its heat in the first dryer 105 may be returned to the heating system for generating the steam, i.e. the steam boiler. The steam and condensate may therefore be circulated in a closed loop, provide by flow path 113 and flow path 114, for the first dryer 105. In this case, the steam chamber of the first dryer 105 is preferably sealed to maintain a substantially clean steam atmosphere, free from water vapour and any other volatiles from the sludge.

The partially dry sludge output from the first dryer 105 is viscous. This sludge is fed from the first dryer 105 to a second dryer 108 by discharging means 106. The discharge of the partially dry sludge may be controlled, for example, by means of a combination of screw conveyors and/or suitable positive displacement pumps such as piston pumps, lamella pumps, lobe pumps, reciprocal pumps or progressive cavity pumps.

The second dryer 108 is steam-heated dryer in which the sludge is indirectly heated. The second dryer 108 may be a disc dryer with steam-heated discs mounted on a pipe rotating inside a closed chamber. The second dryer 108 may thus comprise a sealed steam chamber formed by the internal surface of the discs in which steam is used to heat the discs. The second dryer 108 may also comprise a separate processing chamber on the outside of the discs in which the sludge is located when in use. Each of the steam chamber and the processing chamber may be sealed such that there can be no contamination of the steam in the steam chamber by volatile gases from the sludge in the processing chamber.

The second dryer 108 may be a dryer based on that disclosed in patent US 2,883,163A. The second dryer 108 may be, for example, based on: a known dryer as manufactured by Fjell Technology Group AS: http://www.fjelltg.no/products/fjellturbodiscdryer/ (as viewed on 14^{th} February 2020), a known dryer as manufactured by Haarslev: https://haarslev.com/products/disc-dryer/ (as viewed on 14^{th} February 2020), or any other suitable known dryers.

In the second dryer 108, the sludge is indirectly heated by the steam-heated discs to form a substantially dry sludge. The substantially dry sludge may have a solid content of about 80-95% dry solids. The substantially dry sludge may be in the form of a dry powder such as a granulate.

The substantially dry sludge is then discharged from the second dryer 108 in a discharge stream 112. The discharge may be performed using one or more conveyors 111.

In embodiments, the evaporate formed by evaporating water from the sludge in the first dryer 105 is used to steam-heat the second dryer 108. Thus, the waste heat in the evaporate is utilised and the total required steam input to the system is reduced. This provides a heat efficient system for drying sludge. Compared to a system in which the sludge is dried in a single dryer without re-use of waste heat, a significant energy saving can be achieved.

At least part of a stream of evaporate 115 formed in the first dryer 105, from the evaporated water in the wet sludge, is fed to the steam chamber of the second dryer 108 and is used to indirectly heat the sludge in the second dryer 108. Typically, this stream of evaporate is evaporated water with small particles of sludge, traces of other volatile constituents from the sludge, for example ammonia, and any air that has entered the dryer. In some cases other volatile materials may be vaporized such as organic acids, alcohols or solvents. Condensate formed in the steam chamber when the evaporate gives up its heat is then bled off in a condensate stream 122.

To avoid structural damage to the second dryer 108 by corrosion, and/or build-up of residues on the internal walls of the steam chamber due to the particles in the evaporate, cleaning of the evaporate may be performed prior to it being fed into the second dryer 108. Because the evaporate is to be used inside the steam chamber of the second dryer 108, the evaporate should be substantially clean in order to keep fouling on the heat transfer surfaces to a minimum.

An appropriate cleaning apparatus 118 may be used for cleaning the evaporate. This may be a conventional scrubber, for example a wet scrubber, that washes out any dust, dirt and/or pollutants from the evaporate.

In some embodiments, the scrubber may comprise spray nozzles and in some cases a packing. The scrubber may wash out dust, dirt and/or pollutants. The scrubber may be a closed loop system for washing out dust, dirt and/or pollutants by recirculating condensate of the evaporate in the scrubber through the nozzles and/or packing in the scrubber. As shown in figure 1, the evaporate and recirculated condensate may be fed into a top compartment of the scrubber and the flow of evaporate and condensate through the packing may be a co-flow. Embodiments also include the evaporate being fed into a bottom compartment of the scrubber and the recirculated condensate fed into a top compartment of the scrubber. The packing is arranged between the top compartment and the bottom compartment so that the flow of evaporate and condensate through the packing may be a counter-flow. The evaporate is therefore sprayed with the condensate as it flows up through the packing. The scrubber may also comprise a demister that the evaporate flows through before flowing out of the scrubber. The demister removes liquid droplets from the evaporate.

The condensate circulating in the cleaning apparatus 118 may be cooled slightly in a heat exchanger by a small stream of coolant 119, so that sufficient condensate to maintain a good washing effect of the steam in the scrubber is formed. The coolant may be a liquid or air. The amount of coolant may be controlled by conventional sensors and control valves. Condensate 121 may also be slowly bled off from the cleaning apparatus 118. The flowrate of this may also be controlled by conventional sensors and control valves. The amount of recirculated condensate may be automatically controlled by liquid level sensors and a controller.

The scrubber may alternatively be a non-closed system for cleaning the steam. Alternative cleaning apparatuses are cyclones, rotating dust mops or filters of some sort. Another alternative is to use a condensing heat exchanger to perform the function of the cleaning apparatus 118, in that heat is transferred from the evaporate to a clean stream of steam by means of closed heat loops. The clean stream of steam is then used to heat the second dryer 108.

In embodiments without a cleaning apparatus 118, the evaporated steam in the first dryer 105 may be directly fed into the steam chamber of the second dryer 108. This may be appropriate for certain types of sludge in which the evaporate from the first dryer 105 is sufficiently clean for use in the second dryer 108.

As sludge is dried, the sludge may go through a glue zone, that may also be referred to as a glue-phase, in which it forms a very viscous glue-like dough which induces high shear and friction forces in the drying device. The sludge may also have very poor heat transfer characteristics in this glue zone. The glue zone is typically encountered in sludge with a solid content of about 50-70% dry solids, as described in WO 02/093094 A1.

It is typically difficult to dry sludge that is in the glue zone. To solve this problem, the first dryer 105 may be arranged to dry the wet sludge up to a dryness level before the sludge enters its glue zone. This ensures good heat transfer characteristics of the sludge in the first dryer 105 and limits the wear and tear of the first dryer 105. To overcome the difficulties in the glue zone while further drying the partially dry sludge in the second dryer 108, already dried sludge discharged from the second dryer 108 may be fed back to the sludge input of the second dryer 108. The amount of recirculated dried sludge should be sufficient such that, when mixed with the partially dry sludge that is input to the second dryer 108, the overall solid content of the sludge stays above the upper limit of the glue-phase. This process is described in WO 02/093094 A1. Accordingly, the second dryer 108 may always be operating with sludge that has a solid content higher than that in the glue zone. The drying of sludge that is in the glue zone may thereby be avoided.

In embodiments, the substantially dry sludge output from second dryer 108 may thus be recirculated. This may be done using one or more screw conveyors 109 and 110, or other type of granulate transport systems capable of recycling the substantially dry sludge from the second dryer 108 outlet to an inlet of the second dryer 108. The recycled substantially dry sludge may be mixed with the partially dry sludge either inside or outside of the second dryer 108. The amount of substantially dry sludge that is recycled may be adjusted and controlled so that the solids content after mixing is above the glue phase limit. This enables sludge to be dried by the second dryer 108 without severe wear and tear of the second dryer 108.

For some types of sludge, that may include fish based sludge used in fish and animal feed preparation, the above techniques are not required to avoid the glue zone of the sludge. The sludge may not form a glue-like dough, or may form a glue-like dough only to a small extent. Embodiments therefore also include the second dryer 108 being operated without any of the output substantially dry sludge being recycled.

In some embodiments, the first dryer 105 and the second dryer 108 may be operated at different temperatures. **In** the first dryer 105, the operating temperature in its processing chamber may be higher than the operating temperature in the processing chamber of the second dryer 108.

The first dryer 105 and the second dryer 108 are operated at different pressures. **In** the first dryer 105, the operating pressure in its processing chamber is higher than the operating pressure in the processing chamber of the second dryer 108. For example, the second dryer 108 may be operated at atmospheric pressure while the first dryer 105 is pressurised. Alternatively, the first dryer 105 may be operated at atmospheric pressure while the second dryer 108 is operated under partial vacuum. One or more of the dryers may be structurally adapted so that it can be pressurised. For example, the seals and connections may be made stronger than for similar dryers that do not operate under pressurised conditions.

In an embodiment, the first dryer 105 is operated at about 1 to 8 bar absolute, about 1 to 5 bar absolute, about 2 to 4 bar absolute, and/or about 3 bar absolute while the second dryer 108 is operated at atmospheric pressure. In an alternative embodiment, the first dryer 105 is operated at atmospheric pressure while the second dryer 108 is operated at about between 0 to 1 bar absolute, about 0.01 to 0.5 bar absolute, and/or about 0.1 to 0.3 bar absolute.

Operating the first dryer 105 at a higher pressure and/or temperature than the second dryer 108 may improve the heat efficiency of the re-use of waste heat from the first dryer 105 in the second dryer 108.

Operating at a higher than atmospheric pressure in the first dryer 105 may also promote thermal hydrolysis of the glue forming organic macromolecules in the sludge. This may reduce the tendency to form the glue-like dough in the glue zone and thereby make the drying process of the sludge easier. For example, it may be possible to operate the first dryer 105 with a higher output DS content before the glue-phase starts to develop. For example, the output partially dry sludge may comprise about 45-55% dry solids. Also, the amount of substantially dry sludge that needs to be recycled in the second dryer 108 may be reduced and the mechanical load, tear and wear in the second dryer 108 may be reduced.

Additionally, an elevated operating pressure and/or temperature in the first dryer 105 may aid the full sterilisation of the sludge so that the dried sludge can later safely be used as, for example, fertiliser or landfill. The elevated operating pressure and/or temperature may, for example, kill bacteria efficiently as the sludge is dried in the system. This may help to meet regulations for the manufacturing of products such as fertiliser or landfill.

Operating the two dryers at different pressures and temperatures may also improve the overall heat balance in the system. The thermal hydrolysis in the first dryer 105 may increase the limit for maximum dry solids content in the partially dry sludge and thereby a larger portion of the total evaporation can be performed in the first dryer 105. More waste heat is therefore available in the evaporate from the first dryer 105 and less heat is needed in the second dryer 108. There are also advantages in the dimensioning and operational expenditures of the drying equipment, for example because the heat surfaces in the second dryer 108 may be reduced.

Due to the second dryer 108 being operated at a lower pressure than the first dryer 105, flash evaporation of the partially dry sludge may occur as it is fed from the first dryer 105 to the second dryer 108. The pressurised partially dry sludge may be passed through a manifold and expanded through at least one nozzle or valve 107, and this may cause flash evaporation of the partially dry sludge. The partially dry sludge may thereby be sprayed into the second dryer 108 at high velocity. This may allow effective mixing of the partially dry sludge with the recycled substantially dry sludge in the second dryer 108. This may be done by an arrangement of manifolds and injection nozzles designed so that the partially dry sludge may be flash evaporated. In some embodiments, the nozzles, such as Venturi nozzles, may be arranged such that the flash evaporated partially dry sludge stream is sprayed horizontally into the second dryer 108 (which has a horizontally aligned longitudinal axis). The flash evaporated partially dry sludge stream may be sprayed horizontally through an end of the second dryer 108 into the vapour dome at the top of the second dryer 108. The effect of spraying the stream of partially dry sludge may cause it to be spread over a plurality of the rotating discs in the second dryer 108. The substantially dry sludge may be fed into the second dryer 108 through openings in the top of the second dryer. The openings may be arranged substantially over the region that the partially dry sludge is sprayed over so that as the substantially dry sludge flows vertically downwards into the second dryer 109 it crosses the substantially horizontal sprayed stream of partially dry sludge. This may enhance the mixing of the partially dry sludge and the recycled substantially dry sludge.

As described earlier, in some embodiments part of the evaporate from the first dryer 105 may be used to pre-heat the wet sludge stream in a pre-heater 103 before the wet sludge stream is fed into the first dryer 105. The stream 115 of evaporate output from the first dryer 105 may therefore then be split up into two separate streams, namely a first stream 116 used to heat the second dryer 108 and a second stream 117 used to heat the wet sludge stream in the pre-heater 103. Preferably, the sludge drying system is heat balanced so that the first dryer 105 is arranged to produce enough evaporate to heat both the pre-heater 103 and the second dryer 108. Further, if thermal hydrolysis is promoted in the first dryer 105, more heat in the evaporate will be available due to the rise in the limit for maximum dry solids content in the partially dry sludge, such that a larger amount of pre-heating may be performed. By pre-heating the wet sludge stream, more waste heat may be recovered from the evaporate. This may result in a more heat efficient process. The pre-heater 103 may be any suitable heat exchanger able to efficiently condense a stream of evaporate from the first dryer 105. A stream of condensate 120 may thus be bled from the pre-heater 103 when the evaporate gives up its heat to pre-heat the wet sludge stream.

In some embodiments, the sludge drying system may comprise a condensing system 123 for condensing the water evaporated from the sludge in the second dryer 108.

Embodiments may be used for producing animal and/or fish meal in a more efficient way. The wet sludge stream may, for example, be a sludge stream comprising processed fish, for example processed cut-offs and offal from fish. The dry sludge may then comprise fish meal. In addition, substances for vitamin pills, such as Omega 3, may be produced in the sludge drying and related processes. It may be beneficial to operate the first dryer 105 at atmospheric pressure and the second dryer 108 at below atmospheric pressure when producing animal and/or fish meal. The sludge formed may substantially not experience a glue-phase and so it may not be necessary to recycle the substantially dry sludge in the second dryer 108.

Embodiments include a number of modifications and variations to the above described techniques.

In particular, embodiments include more than two dryers being used to dry the sludge. The evaporate from each dryer may be used for indirect heating in another dryer. For example, the evaporate output from the second dryer 108 may be used for indirect heating of sludge output from the second dryer 108 in a third dryer.

Embodiments also include the use of mechanical vapour recompression (MVR) to further heat, i.e. superheat, the evaporate from the first dryer 105 before it enters the second dryer 108. Mechanical vapour recompression may be used to superheat the evaporate output from the first dryer 105 before it is input into the cleaning apparatus 118, and/or to superheat the cleaned evaporate output from the cleaning apparatus 118. This may be achieved by any suitable known mechanical vapour recompression technique. In embodiments where mechanical vapour recompression is used, the temperature of the evaporate may be about 10 to 30 K higher than when mechanical vapour recompression is not used. The heat transfer in the second dryer 108 may thereby be improved.

In the second dryer 108, it may be desirable to have a large temperature difference between the evaporate from the first dryer 105 that is heating the second dryer 108 and the partially-dried sludge that is being heated. The evaporate from the first dryer 105 is at substantially its boiling point and at the operating pressure of the first dryer 105, whereas the partially-dried sludge is at substantially the boiling temperature of water and at the operating pressure of the second dryer 108. In order to achieve a large temperature difference between the evaporate from the first dryer 105 that is heating the second dryer 108 and the partially-dried sludge that is being heated, the second dryer 108 may operate at a lower pressure than the first dryer 105 so that the boiling point in the second dryer 108 is lower than the boiling point in the first dryer 105. An advantage of using mechanical vapour recompression is that it may substantially reduce the required difference in operating pressures between the first dryer 105 and the second dryer 108. By superheating the evaporate, a particular temperature difference may be achieved with a lower pressure difference, and therefore boiling point difference, in the first dryer 105 and the second dryer 108.

For example, a temperature difference of 50 K may be desired between the first dryer 105 and the second dryer 108. Without mechanical vapour recompression, if the first dryer 105 operates at atmospheric pressure (with a boiling point of 100 degrees Celsius), the second dryer 108 has to operate at about 0.1 bara to achieve the desired temperature difference. If, however, mechanical vapour recompression is used to further heat the evaporate to about 115 to 120 degrees Celsius, the second dryer 108 may instead operate at 0.3 bara (which has a boiling point of about 70 degrees Celsius).

Alternatively, the second dryer 108 may operate at atmospheric pressure (with a boiling point of 100 degrees Celsius). Without mechanical vapour recompression it may then be necessary to operate the first dryer 105 at almost 5 bara to obtain a difference of 50 K in boiling temperature. However, with mechanical vapour recompression, the first dryer 105 may instead be operated at about 3 bara to produce evaporate at a temperature of 133 degree Celsius, which may then be superheated by the mechanical vapour recompression techniques to 150 degree Celsius, in order to achieve an overall temperature difference of 50 K.

Embodiments also include the heat from the evaporate from the first dryer 105 being used in the second dryer 108, but the evaporate from the first dryer 105 not being used in the second dryer 108. The evaporate from the first dryer 105 may be passed through a heat exchanger, such as a conventional finned tube heat exchanger, that may at least partly condense the evaporate. Within the heat exchanger, the heat in the evaporate may be used to indirectly heat a separate fluid stream, that may be an air stream. The second dryer 108 may be a conventional dryer, such as an air dryer, that receives the fluid stream from the heat exchanger and uses it to dry sludge. The second dryer 108 may be arranged to directly heat the sludge or indirectly heat the sludge. In this embodiment, the first dryer 105 may be operated at atmospheric pressure. The temperature of the fluid stream received by the second dryer from the heat exchanger may be 70-80°C. An advantage of this embodiment is that it is not necessary to clean the evaporate from the first dryer 105.

## Claims

1. A method of drying sludge in a sludge drying system, wherein the method comprises:
receiving, at a system input (101) of the sludge drying system, a wet sludge stream,
wherein the wet sludge stream comprises water and solid material;
receiving, at an input of a first dryer (105) of the sludge drying system, the wet sludge stream and heating the wet sludge stream such that at least part of the water in the wet sludge stream is evaporated to thereby generate evaporate and a partially dry sludge stream, wherein the first dryer (105) is an indirectly heated rotating disc dryer that comprises a first output that outputs the evaporate and a second output that outputs the partially dry sludge stream;
receiving, at a first input of a second dryer (108) of the sludge drying system, a stream that is dependent on the partially dry sludge stream output from the first dryer (105) and
receiving, at a second input of the second dryer (108), the evaporate from the first dryer (105), wherein the second dryer (108), that is an indirectly heated rotating disc dryer, uses the received evaporate to indirectly heat the received stream at the first input to thereby generate and output a substantially dry sludge stream; and
outputting, from a system output of the sludge drying system, at least part of the substantially dry sludge stream from the system;
wherein the method further comprises:
operating the first dryer (105) at 1 to 8 bar absolute while the second dryer (108) is operated at atmospheric pressure; or
operating the first dryer (105) at atmospheric pressure while the second dryer (108) is operated at 0.01 bar to 0.5 bar absolute; whereby the first dryer is operated at higher pressure than the second dryer.

2. The method according to claim **1,** wherein the sludge drying system further comprises a cleaning apparatus (118) arranged in a fluid flow path between the first output of the first dryer (105) and the second input of the second dryer (108), the method further comprising using the cleaning apparatus (118) to clean the evaporate.

3. The method according to claim 1 or 2, wherein the sludge drying system further comprises a heating system for generating steam for the indirect heating in the first dryer (105);
wherein the first dryer (105) is a steam-heated dryer;
and
the first dryer (105) further comprises:
a steam input for receiving steam from the heating system; and
a third output for condensate that is generated by the received steam condensing in the first dryer (105);
wherein the system comprises a flow path between the first dryer (105) and the heating system that is arranged to return the condensate from the third output of the first dryer (105) to the heating system; and
wherein the method further comprises using the heating system to generate steam for the indirect heating in the first dryer (105).

4. The method according to claim 2, or claim 3 when dependent on claim 2, wherein the cleaning apparatus (118) is a scrubber such as a wet scrubber.

5. The method according to claim 2, or any claim dependent on claim 2, wherein the cleaning apparatus (118) comprises:
a first input for evaporate;
a first output for evaporate;
a second output for condensate that has been generated by the evaporate received by the cleaning apparatus (118) condensing in the cleaning apparatus (118); and
a second input for receiving at least part of the condensate output from the second output of the cleaning apparatus (118);
wherein the cleaning apparatus (118) is arranged such that, within the cleaning apparatus (118), evaporate received at the first input is washed with the condensate received at the second input.

6. The method according to any preceding claim, wherein the stream that is indirectly heated in the second dryer (108) comprises a mixture of sludge from the substantially dry sludge stream output from the second dryer (108) and sludge from the partially dry sludge stream output from the first dryer (105);
wherein, optionally, the sludge from the substantially dry sludge stream is mixed with the sludge from the partially dry sludge stream in a ratio that is between 1:1 to **10:1, and** preferably between 3:1 to 5:1.

7. The method according to any preceding claim, the sludge drying system further comprises a pre-heater (103) arranged in a fluid flow path between the system input and the input of the first dryer (105) for a wet sludge stream;
wherein the pre-heater (103) is arranged to use at least some of the evaporate from the first output of the first dryer (105) to indirectly heat the wet sludge stream.

8. The method according to any preceding claim, further comprising using different operational temperatures within the first dryer (105) and the second dryer (108).

9. The method according to any preceding claim, wherein the first input of the second dryer (108) is arranged such that the partially dry sludge stream is sprayed into the second dryer (108).

10. The method according to any preceding claim, wherein the evaporate from the first dryer (105) is further heated by a mechanical vapour recompression technique before being received by the second dryer (108).

11. A method of drying sludge in a sludge drying system, wherein the method comprises:
receiving, at a system input of the sludge drying system, a wet sludge stream, wherein the wet sludge stream comprises water and solid material;
receiving, at an input of a first dryer (105) of the sludge drying system, the wet sludge stream and heating the wet sludge stream such that at least part of the water in the wet sludge stream is evaporated to thereby generate evaporate and a partially dry sludge stream, wherein the first dryer (105) is an indirectly heated rotating disc dryer that comprises a first output that outputs the evaporate and a second output that outputs the partially dry sludge stream;
receiving, by a heat exchanger of the sludge drying system, the evaporate and transferring heat from the evaporate to a separate fluid stream;
receiving, at a first input of a second dryer (108) of the sludge drying system, a stream that is dependent on the partially dry sludge stream output from the first dryer (105) and receiving, at a second input of the second dryer (108), the separate fluid stream, wherein the second dryer (108), that is an indirectly heated rotating disc dryer, uses to the received separate fluid stream to indirectly heat the received stream at the first input to thereby generate and output a substantially dry sludge stream; and
outputting, from a system output of the sludge drying system, at least part of the substantially dry sludge stream from the system;
wherein the method further comprises:
operating the first dryer (105) at 1 to 8 bar absolute while the second dryer (108) is operated at atmospheric pressure; or
operating the first dryer (105) at atmospheric pressure while the second dryer (108) is operated at 0.01 bar to 0.5 bar absolute; whereby the first dryer is operated at a higher pressure than the second dryer.

12. The method according to claim 11, wherein the separate fluid stream is an air stream.

## Patentansprüche

1. Verfahren zum Trocknen von Schlamm in einem Schlammtrocknungssystem, wobei das Verfahren umfasst:
Aufnehmen eines nassen Schlammflusses an einem Systemeingang (101) des Schlammtrocknungssystems, wobei der nasse Schlammfluss Wasser und festes Material umfasst;
Aufnehmen des nassen Schlammflusses an einem Eingang eines ersten Trockners (105) des Schlammtrocknungssystems und Erhitzen des nassen Schlammfluss, sodass wenigstens ein Teil des Wassers in dem nassen Schlammfluss verdampft wird, um dadurch ein Verdampfungsprodukt und einen teilweise trockenen Schlammfluss zu erzeugen, wobei der erste Trockner (105) ein indirekt erhitzter Rotationsscheibentrockner ist, der einen ersten Ausgang, der das Verdampfungsprodukt ausgibt, und einen zweiten Ausgang umfasst, der den teilweise trockenen Schlammfluss ausgibt;
Aufnehmen, an einem ersten Eingang eines zweiten Trockners (108) des Schlammtrocknungssystems, eines Flusses, der von dem teilweise trockenen Schlammfluss abhängt, der von dem ersten Trockner (105) ausgegeben wird, und
Aufnehmen an einem zweiten Eingang des zweiten Trockners (108) des Verdampfungsprodukts von dem ersten Trockner (105), wobei der zweite Trockner (108), der ein indirekt erhitzter Rotationsscheibentrockner ist, das aufgenommene Verdampfungsprodukt verwendet, um den aufgenommenen Fluss an dem ersten Eingang indirekt zu erhitzen, um dadurch einen im Wesentlichen trockenen Schlammfluss zu erzeugen und auszugeben; und
Ausgeben aus einem Systemausgang des Schlammtrocknungssystems von wenigstens einem Teil des im Wesentlichen trockenen Schlammfluss;
wobei das Verfahren ferner umfasst:
Betreiben des ersten Trockners (105) bei 1 bis 8 bar absolut, während der zweite Trockner (108) bei atmosphärischem Druck betrieben wird; oder
Betreiben des ersten Trockners (105) bei atmosphärischem Druck, während der zweite Trockner (108) bei 0,01 bar bis 0,5 bar absolut betrieben wird; wodurch der erste Trockner bei einem höheren Druck als der zweite Trockner betrieben wird.

2. Verfahren nach Anspruch 1, wobei das Schlammtrocknungssystem ferner eine Reinigungseinrichtung (118) umfasst, die in einem Fluidflussweg zwischen dem ersten Ausgang des ersten Trockners (105) und dem zweiten Eingang des zweiten Trockners (108) angeordnet ist, wobei das Verfahren ferner das Verwenden der Reinigungseinrichtung (118) zum Reinigen des Verdampfungsprodukts umfasst.

3. Verfahren nach Anspruch 1 oder 2, wobei das Schlammtrocknungssystem ferner ein Heizsystem zum Erzeugen von Dampf für das indirekte Erhitzen in dem ersten Trockner (105) umfasst;
wobei der erste Trockner (105) ein dampferhitzter Trockner ist;
und
der erste Trockner (105) ferner umfasst:
einen Dampfeingang zum Aufnehmen von Dampf aus dem Heizsystem; und
einen dritten Ausgang für Kondensat, das durch die Kondensation des aufgenommenen Dampfes in dem ersten Trockner (105) erzeugt wird;
wobei das System einen Flussweg zwischen dem ersten Trockner (105) und dem Heizsystem umfasst, der angeordnet ist, um das Kondensat von dem dritten Ausgang des ersten Trockners (105) zu dem Heizsystem zurückzuführen; und
wobei das Verfahren ferner das Verwenden des Heizsystems zum Erzeugen von Dampf für das indirekte Erhitzen in dem ersten Trockner (105) umfasst.

4. Verfahren nach Anspruch 2 oder 3, wenn abhängig von Anspruch 2, wobei die Reinigungseinrichtung (118) ein Wäscher, wie ein Nasswäscher, ist.

5. Verfahren nach Anspruch 2 oder einem von Anspruch 2 abhängigen Anspruch, wobei die Reinigungseinrichtung (118) umfasst:
einen ersten Eingang für Verdampfung;
einen ersten Ausgang für das Verdampfungsprodukt;
einen zweiten Ausgang für Kondensat, das durch das von der Reinigungseinrichtung (118) aufgenommene Verdampfungsprodukt erzeugt wurde, das in der Reinigungseinrichtung (118) kondensiert; und
einen zweiten Eingang zum Aufnehmen wenigstens eines Teils des Kondensats, das aus dem zweiten Ausgang der Reinigungseinrichtung (118) ausgegeben wird;
wobei die Reinigungseinrichtung (118) angeordnet ist, sodass innerhalb der Reinigungseinrichtung (118) das an dem ersten Eingang aufgenommene Verdampfungsprodukt mit dem an dem zweiten Eingang aufgenommenen Kondensat gewaschen wird.

6. Verfahren nach einem der vorstehenden Ansprüche, wobei der in dem zweiten Trockner (108) indirekt erhitzte Fluss eine Mischung aus Schlamm aus dem im Wesentlichen trockenen Schlammfluss, der aus dem zweiten Trockner (108) ausgegeben wird, und Schlamm aus dem teilweise trockenen Schlammfluss, der aus dem ersten Trockner (105) ausgegeben wird, umfasst;
wobei optional der Schlamm aus dem im Wesentlichen trockenen Schlammfluss mit dem Schlamm aus dem teilweise trockenen Schlammfluss in einem Verhältnis gemischt wird, das zwischen 1 : 1 und 10 : 1 und vorzugsweise zwischen 3 : 1 und 5 : 1 liegt.

7. Verfahren nach einem der vorstehenden Ansprüche, wobei das Schlammtrocknungssystem ferner einen Vorwärmer (103) umfasst, der in einem Fluidflussweg zwischen dem Systemeingang und dem Eingang des ersten Trockners (105) für einen nassen Schlammfluss angeordnet ist;
wobei der Vorwärmer (103) angeordnet ist, um wenigstens einen Teil des Verdampfungsprodukts aus dem ersten Ausgang des ersten Trockners (105) zu verwenden, um den nassen Schlammfluss indirekt zu erhitzen.

8. Verfahren nach einem der vorstehenden Ansprüche, das ferner das Verwenden unterschiedlicher Betriebstemperaturen innerhalb des ersten Trockners (105) und des zweiten Trockners (108) umfasst.

9. Verfahren nach einem der vorstehenden Ansprüche, wobei der erste Eingang des zweiten Trockners (108) angeordnet ist, sodass der teilweise trockene Schlammfluss in den zweiten Trockner (108) gesprüht wird.

10. Verfahren nach einem der vorstehenden Ansprüche, wobei das Verdampfungsprodukt aus dem ersten Trockner (105) durch eine mechanische Dampfrekompressionstechnik weiter erhitzt wird, bevor es von dem zweiten Trockner (108) aufgenommen wird.

11. Verfahren zum Trocknen von Schlamm in einem Schlammtrocknungssystem, wobei das Verfahren umfasst:
Aufnehmen eines nassen Schlammflusses an einem Systemeingang des Schlammtrocknungssystems, wobei der nasse Schlammfluss Wasser und festes Material umfasst;
Aufnehmen des nassen Schlammflusses an einem Eingang eines ersten Trockners (105) des Schlammtrocknungssystems und Erhitzen des nassen Schlammfluss, sodass wenigstens ein Teil des Wassers in dem nassen Schlammfluss verdampft wird, um dadurch ein Verdampfungsprodukt und einen teilweise trockenen Schlammfluss zu erzeugen, wobei der erste Trockner (105) ein indirekt erhitzter Rotationsscheibentrockner ist, der einen ersten Ausgang, der das Verdampfungsprodukt ausgibt, und einen zweiten Ausgang umfasst, der den teilweise trockenen Schlammfluss ausgibt;
Aufnehmen durch einen Wärmetauscher des Schlammtrocknungssystems des Verdampfungsprodukts und Übertragen der Hitze von dem Verdampfungsprodukt auf einen getrennten Fluidfluss;
Aufnehmen, an einem ersten Eingang eines zweiten Trockners (108) des Schlammtrocknungssystems, eines Flusses, der von dem teilweise trockenen Schlammfluss abhängt, der von dem ersten Trockner (105) ausgegeben wird, und
Aufnehmen an einem zweiten Eingang des zweiten Trockners (108) des getrennten Fluidflusses, wobei der zweite Trockner (108), der ein indirekt erhitzter Rotationsscheibentrockner ist, den aufgenommenen Fluidfluss verwendet, um den aufgenommenen Fluss an dem ersten Eingang indirekt zu erhitzen, um dadurch einen im Wesentlichen trockenen Schlammfluss zu erzeugen und auszugeben; und
Ausgeben aus einem Systemausgang des Schlammtrocknungssystems von wenigstens einem Teil des im Wesentlichen trockenen Schlammfluss aus dem System;
wobei das Verfahren ferner umfasst:
Betreiben des ersten Trockners (105) bei 1 bis 8 bar absolut, während der zweite Trockner (108) bei atmosphärischem Druck betrieben wird; oder
Betreiben des ersten Trockners (105) bei atmosphärischem Druck, während der zweite Trockner (108) bei 0,01 bar bis 0,5 bar absolut betrieben wird; wodurch der erste Trockner bei einem höheren Druck als der zweite Trockner betrieben wird.

12. Verfahren nach Anspruch 11, wobei der getrennte Fluidfluss ein Luftstrom ist.

## Revendications

1. Procédé de séchage de boues dans un système de séchage de boues, le procédé comprenant :
la réception, au niveau d'une entrée (101) du système de séchage de boues, d'un flux de boues humides,
le flux de boues humides comprenant de l'eau et des matières solides ;
la réception, au niveau d'une entrée d'un premier séchoir (105) du système de séchage de boues, du flux de boues humides, et le chauffage du flux de boues humides de façon qu'au moins une partie de l'eau contenue dans le flux de boues humides s'évapore pour ainsi générer un produit évaporé et un flux de boues partiellement sèches, le premier séchoir (105) étant un séchoir à disques rotatifs à chauffage indirect qui comprend une première sortie qui évacue le produit évaporé et une deuxième sortie qui évacue le flux de boues partiellement sèches ;
la réception, au niveau d'une première entrée d'un deuxième séchoir (108) du système de séchage de boues, d'un flux qui dépend du flux de boues partiellement sèches évacué par le premier séchoir (105) et la réception, au niveau d'une deuxième entrée du deuxième séchoir (108), du produit évaporé provenant du premier séchoir (105), le deuxième séchoir (108), qui est un séchoir à disques rotatifs à chauffage indirect, utilisant le produit évaporé reçu pour chauffer indirectement le flux reçu au niveau de la première entrée pour ainsi générer et évacuer un flux de boues sensiblement sèches ; et
l'évacuation, par une sortie du système de séchage de boues, d'au moins une partie du flux de boues sensiblement sèches issu du système ;
le procédé comprenant en outre :
l'exploitation du premier séchoir (105) à une pression de 1 à 8 bars absolus tandis que le deuxième séchoir (108) est exploité à la pression atmosphérique, ou
l'exploitation du premier séchoir (105) à la pression atmosphérique tandis que le deuxième séchoir (108) est exploité à une pression de 0,01 bar à 0,5 bar absolu,
le premier séchoir étant ainsi exploité à une pression plus élevée que le deuxième séchoir.

2. Procédé selon la revendication 1, dans lequel le système de séchage de boues comprend en outre un dispositif de nettoyage (118) agencé dans un trajet d'écoulement de fluide entre la première sortie du premier séchoir (105) et la deuxième entrée du deuxième séchoir (108), le procédé comprenant en outre l'utilisation de l'appareil de nettoyage (118) pour nettoyer le produit évaporé.

3. Procédé selon la revendication 1 ou 2, dans lequel le système de séchage de boues comprend en outre un système de chauffage destiné à générer de la vapeur pour le chauffage indirect dans le premier séchoir (105),
le premier séchoir (105) étant un séchoir chauffé à la vapeur,
et
le premier séchoir (105) comprenant en outre :
une entrée de vapeur destinée à recevoir la vapeur issue du système de chauffage, et
une troisième sortie pour le condensat généré par la condensation de la vapeur reçue dans le premier séchoir (105) ;
le système comprenant un trajet d'écoulement entre le premier séchoir (105) et le système de chauffage qui est agencé pour renvoyer le condensat issu de la troisième sortie du premier séchoir (105) vers le système de chauffage, et
le procédé comprenant en outre l'utilisation du système de chauffage pour générer de la vapeur pour le chauffage indirect dans le premier séchoir (105).

4. Procédé selon la revendication 2, ou la revendication 3 lorsqu'elle dépend de la revendication 2, dans lequel l'appareil de nettoyage (118) est un épurateur tel qu'un épurateur humide.

5. Procédé selon la revendication 2, ou toute revendication dépendant de la revendication 2, dans lequel l'appareil de nettoyage (118) comprend :
une première entrée pour le produit évaporé,
une première sortie pour le produit évaporé,
une deuxième sortie pour le condensat qui a été généré par la condensation, dans l'appareil de nettoyage (118), du produit évaporé reçu par l'appareil de nettoyage (118), et
une deuxième entrée pour recevoir au moins une partie du condensat évacué par la deuxième sortie de l'appareil de nettoyage (118),
l'appareil de nettoyage (118) étant agencé de façon que, à l'intérieur de l'appareil de nettoyage (118), le produit évaporé reçu au niveau de la première entrée est lavé avec le condensat reçu au niveau de la deuxième entrée.

6. Procédé selon l'une quelconque des revendications précédentes, dans lequel le flux qui est chauffé indirectement dans le deuxième séchoir (108) comprend un mélange de boues issues du flux de boues sensiblement sèches évacué du deuxième séchoir (108) et de boues issues du flux de boues partiellement sèches évacué du premier séchoir (105),
les boues issues du flux de boues sensiblement sèches étant éventuellement mélangées aux boues issues du flux de boues partiellement sèches dans un rapport compris entre 1:1 et 10:1, et de préférence entre 3:1 et 5:1.

7. Procédé selon l'une quelconque des revendications précédentes, le système de séchage de boues comprenant en outre un organe de préchauffage (103) agencé dans un trajet d'écoulement de fluide entre l'entrée du système et l'entrée du premier séchoir (105) pour un flux de boues humides,
l'organe de préchauffage (103) étant agencé pour utiliser au moins une partie du produit évaporé issu de la première sortie du premier séchoir (105) afin de chauffer indirectement le flux de boues humides.

8. Procédé selon l'une quelconque des revendications précédentes, comprenant en outre l'utilisation de différentes températures de service dans le premier séchoir (105) et le deuxième séchoir (108).

9. Procédé selon l'une quelconque des revendications précédentes, dans lequel la première entrée du deuxième séchoir (108) est agencée de façon que le flux de boues partiellement sèches soit pulvérisé dans le deuxième séchoir (108).

10. Procédé selon l'une quelconque des revendications précédentes, dans lequel le produit évaporé issu du premier séchoir (105) est encore chauffé par une technique de recompression mécanique de la vapeur avant d'être reçu par le deuxième séchoir (108).

11. Procédé de séchage de boues dans un système de séchage de boues, le procédé comprenant :
la réception, au niveau d'une entrée e du système de séchage de boues, d'un flux de boues humides, le flux de boues humides comprenant de l'eau et des matières solides,
la réception, au niveau d'une entrée d'un premier séchoir (105) du système de séchage de boues, du flux de boues humides, et le chauffage du flux de boues humides de façon qu'au moins une partie de l'eau contenue dans le flux de boues humides s'évapore, pour ainsi générer un produit évaporé et un flux de boues partiellement sèches, le premier séchoir (105) étant un séchoir à disques rotatifs à chauffage indirect qui comprend une première sortie qui évacue le produit évaporé et une deuxième sortie qui évacue le flux de boues partiellement sèches,
la réception, par un échangeur de chaleur du système de séchage de boues, du produit évaporé, et le transfert de la chaleur du produit évaporé à un flux de fluide séparé,
la réception, au niveau d'une première entrée d'un deuxième séchoir (108) du système de séchage de boues, d'un flux qui dépend du flux de boues partiellement sèches évacué par le premier séchoir (105) et la réception, au niveau d'une deuxième entrée du deuxième séchoir (108), du flux de fluide séparé, ledit deuxième séchoir (108), qui est un séchoir à disques rotatifs à chauffage indirect, utilisant le flux de fluide séparé reçu pour chauffer indirectement le flux reçu au niveau de la première entrée pour ainsi générer et évacuer un flux de boues sensiblement sèches, et
l'évacuation, par une sortie du système de séchage de boues, d'au moins une partie du flux de boues sensiblement sèches issu du système ;
le procédé comprenant en outre :
l'exploitation du premier séchoir (105) à une pression de 1 à 8 bars absolus tandis que le deuxième séchoir (108) est exploité à la pression atmosphérique, ou
l'exploitation du premier séchoir (105) à la pression atmosphérique tandis que le deuxième séchoir (108) est exploité à une pression de 0,01 bar à 0,5 bar absolu,
le premier séchoir étant ainsi exploité à une pression plus élevée que le deuxième séchoir.

12. Procédé selon la revendication 11, dans lequel le flux de fluide séparé est un flux d'air.
